# EUROPEAN PATENT SPECIFICATION

(11) **EP 2 292 706 B1**
(45) Date of publication and mention of the grant of the patent: **23.07.2014**
(21) Application number: 09758391.8
(22) Date of filing: 04.06.2009
(51) Int. Cl.: C09D 11/00, B41J 2/01, B41M 5/00, B41M 5/50, B41M 5/52, C09D 11/10

(54) **PHOTOCURABLE INKJET PRINTING INK COMPOSITION AND PRINT**
PHOTOHÄRTBARE FARBSTRAHLDRUCKTINTENZUSAMMENSETZUNG UND DRUCKERZEUGNIS
COMPOSITION PHOTODURCISSABLE D'ENCRE D'IMPRESSION PAR JET D'ENCRE ET IMPRESSION

(30) Priority: 05.06.2008 JP 2008148094
(43) Date of publication of application: 09.03.2011
(73) Proprietor: Sakata INX Corp., Osaka-shi, Osaka 550-0002 (JP)
(72) Inventor: TSUCHIYA Tatsuro, Osaka-shi Osaka 550-0002 (JP); MIZUTANI Shinya, Osaka-shi Osaka 550-0002 (JP); ONO Taichi, Osaka-shi Osaka 550-0002 (JP)
(74) Representative: Brunetti, Fabrizio
(86) International application number: PCT/JP2009/060262
(87) International publication number: WO 2009/148124

(56) References cited:
- EP-A1- 1 882 724
- EP-A1- 1 903 080
- WO-A1-02/38687
- WO-A1-2004/099272
- JP-A- 2006 169 419
- JP-A- 2008 031 269
- JP-A- 2008 101 177
- JP-A- 2009 035 650
- US-A1- 2007 017 415

## Description

### TECHNICAL FIELD

The present invention relates to a photocurable ink composition for ink-jet printing, and a printed article. More specifically, the present invention relates to a photocurable ink composition for ink-jet printing, which exhibits excellent curing properties in response to light from light emitting diodes (LEDs), is adhered well to a polyvinyl chloride sheet such as tarpaulin or a vinyl chloride resin sheet, can sufficiently reduce cockling, has a low viscosity but a high flash point, and can achieve both of high jetability from a jet head and high safety properties owing to these properties, and also relates to a printed article.

### BACKGROUND ART

In recent years, ink-jet recording systems have enabled the production of printed articles with high image quality by using ink compositions having performance optimized to substrates of various types. Further, by taking advantage of their features which do not require printing plates, the ink-j et recording systems remarkably have facilitated printing and reduced printing costs, and application thereof to substrates with a large width called "wide format" became possible. Nowadays, by taking advantage of these and other characteristics, these systems are increasing the frequency of their use for the production of outdoor large-scale advertisements with a large image area and the like.

As substrates used for such a usage, polyvinyl chloride sheets, which are tough enough to withstand outdoor use are used. Examples thereof include sheets made only of vinyl chloride resin, and tarpaulin sheets which are made of a composite material. As ink compositions for ink-jet printing on these polyvinyl chloride sheets, oil-base ink compositions are mainly used because of their good adhesiveness to these substrates (see, for example, Patent Document 1).

However, the use of oil-base ink compositions for ink-jet printing may result in environmental problems such as deterioration of working environment and natural environment, which are caused by volatilized components such as an organic solvent. For this reason, the use of a photocurable ink composition for ink-jet printing which is free from volatile components has been proposed.

In order that the outdoor advertisements and the like can withstand wind and rain, ink compositions capable of forming tough coats should be used. However, photocurable materials capable of forming tough coats typically form coats with high hardness and such coats are likely to be poorly adhered to substrates. In order to improve the adhesiveness of such ink compositions to substrates, a method is employed in which a component capable of dissolving a substrate is contained in these ink compositions. For example, there has been proposed an active energy ray-curable ink-jet ink for a polyvinyl chloride sheet which contains a specific ratio of an ethylenic double bond-containing compound incapable of dissolving polyvinyl chloride and an ethylenic double bond-containing compound capable of dissolving polyvinyl chloride (N-vinyl caprolactam) (see, for example, Patent Document 2).

However, there was a problem that it became easy to happen of cockling (the substrates are likely to warp) though the adhesion to polyvinyl chloride sheets became well when printed articles were produced with the use of these ink-jet inks.

The use of conventionally and commonly used high-energy light sources such as metal halide lamps to cure images is problematic in that these lamps generate ozone and require a large-scale irradiation device, and that their lamp lifetime is short. Accordingly, in recent years, the use of light emitting diode lamps (LED lamps), which are low-energy light sources, has become popular. Therefore, there is an increasing need for ink-jet inks that exhibits good curing properties in response to light from these lamps and good print performance (e.g. improved adhesiveness and improvement of cockling).

Further, for safety and hygiene reasons, there is a recent strong demand for photocurable ink compositions for ink-jet printing with higher safety corresponding to Category 4 for flammable liquids (flash point of higher than 60°C and not higher than 93°C) under the GHS (Globally Harmonized System of Classification and Labeling of Chemicals).

### PRIOR ART DOCUMENT

### Patent Document

Patent Document 1: JP-A 2005-023298
Patent Document 2: JP-A 2006-169419

### SUMMARY OF THE INVENTION

### PROBLEMS TO BE SOLVED BY THE INVENTION

An object of the present invention is to provide a photocurable ink composition for ink-jet printing which exhibits excellent curing properties in response to light from light emitting diodes (LEDs), is adhered well to a polyvinyl chloride sheet such as tarpaulin or a vinyl chloride resin sheet, can sufficiently reduce cockling, has a low viscosity but a high flash point, and owing to these properties can achieve both of high discharge performance even at a normal temperature and high safety properties such as low flammability.

### MEANS FOR SOLVING THE PROBLEMS

In order to achieve the demands for composition that exhibits good curing properties in response to light from light emitting diodes (LEDs), is adhered well to a polyvinyl chloride sheet, and has the ability to prevent cockling, the present inventors have already proposed a photocurable ink composition for ink-jet printing which contains: as a photopolymerizable compound, an acrylated amine compound having two photopolymerizable functional groups and two amino groups in the molecule; and as a photopolymerization initiator, a compound that comes to function as an initiator in response to light with a wavelength of 450 to 300 nm.

This proposal improved curing properties in response to light from light emitting diodes and print performance to a good level.

However, ink-jet inks containing an acrylated amine compound having two photopolymerizable functional groups and two amino groups in the molecule typically have a high viscosity. Although inks for ink-jet printing are required to have a performance (jetability) of being rapidly filled into a nozzle of a jet head and jetted with less force, it is difficult to achieve good jetability while the viscosity is maintained at a high level. In order to decrease the viscosity, it is necessary to use a photopolymerizable compound that decreases the viscosity of the inks as well.

If, in order to decrease the viscosity, a photopolymerizable compound is added to the photocurable ink composition for ink-jet printing which the present inventors have proposed, the ink composition is categorized into Category 3 for flammable liquids (flash point of from 23°C to 60°C) under the GHS due to the addition. Thus, the ink composition brought a need for further improvement to raise the flash point.

In order to solve the above problems, the present inventors have further intensively studied and found that the use of 2-methoxyethyl acrylate and/or 2-ethoxyethyl acrylate as photopolymerizable compounds for decreasing the viscosity in an ink composition decreases the viscosity of the ink composition to a relatively low level while its flash point is maintained at a temperature of higher than 60°C. Thus, the present inventors found a way to solve all the above problems and completed the present invention.

The present invention relates to (1) a photocurable ink composition for ink-jet printing, including at least: photopolymerizable compounds; a photopolymerization initiator; and a sensitizer, and having a flash point of higher than 60°C when measured with a SETA closed-cup flash point tester by a method in accordance with JIS K2256, wherein the photopolymerizable compounds include 2-methoxyethyl acrylate and/or 2-ethoxyethyl acrylate, and N-vinyl caprolactam, and an acrylated amine compound having two photopolymerizable functional groups and two amino groups in the molecule, the total amount of 2-methoxyethyl acrylate and/or 2-ethoxyethyl acrylate is 20 to 50% by mass of the photocurable ink composition for ink-jet printing, the photopolymerization initiator includes a compound that comes to function as an initiator in response to light having a wavelength of 450 to 300 nm, and the sensitizer includes a compound that comes to function as a sensitizer in response to light having a wavelength of 400 nm or longer.

The present invention also relates to (2) the photocurable ink composition for ink-jet printing described in (1), wherein the acrylated amine compound has (meth)acryloyl groups as the two photopolymerizable functional groups and has an amine value of 130 to 142 KOHmg/g.

The present invention also relates to (3) the photocurable ink composition for ink-jet printing described in (1) or (2), which has a viscosity of not higher than 20 mPa·s at an ink-jet printing liquid temperature.

The present invention also relates to (4) the photocurable ink composition for ink-jet printing described in (1), (2) or (3), further including a pigment.

The present invention also relates to (5) a printed article obtainable by printing of the photocurable ink compositions for ink-jet printing described in (1), (2), (3) or (4) at a thickness of 1 to 20 µm on a polyvinyl chloride sheet and photocuring the ink composition for ink-jet printing.

Hereinafter, the photocurable ink composition for ink-jet printing of the present invention and the printed article that is obtained by using thereof are described specifically.

The present invention provides a photocurable ink composition for ink-jet printing which contains at least: photopolymerizable compounds; a photopolymerization initiator; and a sensitizer. The photopolymerizable compounds in the photocurable ink composition for ink-jet printing of the present invention include 2-methoxyethyl acrylate and/or 2-ethoxyethyl acrylate. Photopolymerizable compounds conventionally used in photocurable ink compositions for ink-jet printing generally have a trend showing that the lower the viscosity, the better the curing properties in response to light from light emitting diodes but the lower the flash point. Therefore, in most cases, the use of photopolymerizable compositions with a low viscosity for the purpose of decreasing the viscosity of an ink composition to improve the jetability lowers the flash point as well. In contrast, in spite of their low viscosity, 2-methoxyethyl acrylate and 2-ethoxyethyl acrylate do not lower the flash point so much, and in addition, can maintain the curing properties in response to light from light emitting diodes at a good level. By taking advantage of this characteristic, the present invention makes it possible to decrease the viscosity while the flash point is not lowered and is maintained at a certain level, by using 2-methoxyethyl acrylate and/or 2-ethoxyethyl acrylate in combination with other later-described photopolymerizable compounds. The ink composition of the present invention can achieve a good level of the curing properties in response to light from light emitting diodes, high adhesiveness, and high ability to prevent cockling, as well.

In the present invention, the total amount of 2-methoxyethyl acrylate and/or 2-ethoxyethyl acrylate is 20 to 50% by mass of the photocurable ink composition for ink-jet printing, and is preferably 30 to 50% by mass. If the amount is less than 20% by mass, the effect of lowering the viscosity of the ink composition while maintaining high flash point and good curing properties in response to light from light emitting diodes may not be sufficiently provided. If the amount is more than 50% by mass, the flash point will be lowered.

In order to improve the adhesiveness to polyvinyl chloride sheets and cockling, the photopolymerizable compounds in the photocurable ink composition for ink-jet printing of the present invention further includes an acrylated amine compound having two photopolymerizable functional groups and two amino groups (acrylated amine synergist). The use of this acrylated amine compound provides high adhesiveness to polyvinyl chloride sheets and also enables prevention of cockling.

Examples of the photopolymerizable functional groups include functional groups that form a crosslink between molecules in a polymerization reaction that occurs in response to irradiation with visible light or invisible light such as ultraviolet light and ionizing radiation including electron beams. Such photopolymerizable functional groups are intended to include both of photopolymerizable functional groups in a narrow sense which are directly activated by light irradiation and initiate a photopolymerization reaction, and photopolymerizable functional groups in a broad sense which, in the presence of a photopolymerization initiator, get involved in a polymerization reaction initiated and accelerated by the function of an activated species generated from the photopolymerization initiator in response to light irradiation.

Examples of the photopolymerizable functional groups include radical photopolymerizable functional groups such as functional groups having an ethylenic double bond; and cationic photopolymerizable functional groups and anionic photopolymerizable functional groups such as cyclic ether groups (e.g. epoxy group). Among these, functional groups having an ethylenic double bond such as (meth)acryloyl group, vinyl group, and allyl group are preferable, and (meth) acryloyl group is more preferable.

The term " (meth) acryloyl group" used herein means either acryloyl group or methacryloyl group.

Preferably, the acrylated amine compound has two (meth) acryloyl groups as the two photopolymerizable functional groups and has an amine value of 130 to 142 KOHmg/g. Such an acrylated amine compound improves the adhesiveness to polyvinyl chloride sheets and cockling.

The amine value used herein means an amine value per 1 g of the solids content, which is calculated by converting a value measured using 0.1 N of aqueous hydrochloric acid by potentiometer titration with a device such as COMTITE (AUTO TITRATOR COM-900, BURET B-900, or TITSTATION K-900 (products of Hiranuma Sangyo Corporation)) into the equivalent amount of potassium hydroxide.

In view of the effects of the present invention, the acrylated amine compound is preferably a compound produced by the reaction between a bifunctional (meth) acrylate and an amine compound.

Examples of the bifunctional (meth)acrylate include: alkylene glycol di(meth)acrylates such as 1,4-butanediol di(meth)acrylate, 1,6-hexanediol di (meth) acrylate, 1,9-nonanediol di(meth)acrylate, propylene glycol di(meth)acrylate, 1,3-butylene glycol di(meth)acrylate, and neopentyl glycol di(meth)acrylate; bisphenol alkylene oxide adduct di(meth)acrylates such as bisphenol A ethylene oxide adduct di(meth)acrylate, bisphenol F ethylene oxide adduct di(meth)acrylate, bisphenol S ethylene oxide adduct di(meth)acrylate, thiobisphenol ethylene oxide adduct di(meth)acrylate, and brominated bisphenol A ethylene oxide adduct di (meth) acrylate; polyalkylene glycol di (meth) acrylate such as polyethylene glycol di (meth) acrylate and polypropylene glycol di(meth)acrylate; and neopentyl glycol hydroxypivalate di(meth)acrylate. Among these, 1, 6-hexanediol di(meth)acrylate is preferable.

The term "(meth)acrylate" used herein means either acrylate or methacrylate.

Examples of the amine compound include monofunctional amine compounds such as benzylamine, phenethylamine, ethylamine, n-propylamine, isopropylamine, n-butylamine, isobutylamine, n-pentylamine, isopentylamine, n-hexylamine, cyclohexylamine, n-heptylamine, n-octylamine, 2-ethylhexylamine, n-nonylamine, n-decylamine, n-dodecylamine, n-tetradecylamine, n-hexadecylamine, and n-octadecylamine; and polyfunctional amine compounds such as diethylenetriamine, triethylenetetramine, tetraethylenepentamine, 1,6-hexamethylenediamine, 1,8-octamethylenediamine, 1,12-dodecamethylenediamine, o-phenylenediamine, p-phenylenediamine, m-phenylenediamine, o-xylylenediamine, p-xylylenediamine, m-xylylenediamine, menthanediamine, bis(4-amino-3-methyl)cyclohexylmethane, isophoronediamine, 1,3-diaminocyclohexane, and spiroacetal-based diamines. Other examples of the amine compound include high molecular weight polyfunctional amine compounds such as polyethyleneimine, polyvinylamine, and polyallylamine.

As the acrylated amine compound, a compound obtained by reacting 1,6-hexanediol di(meth)acrylate with an amine compound is preferably used. Specific examples thereof include CN371 (product of SARTOMER) and EB-7100 (EBECRYL 7100, product of DAICEL-Cytec).

In the present invention, the amount of the acrylated amine compound is preferably 5 to 20% by mass of the photocurable ink composition for ink-jet printing, and is more preferably 10 to 20% by mass. If the amount thereof is less than 5% by mass, the adhesiveness to polyvinyl chloride sheets is likely to be lower and the frequency of cockling is likely to be higher. If the amount is more than 20% by mass, the viscosity of the ink composition will be problematically too high.

The photopolymerizable compounds in the photocurable ink composition for ink-jet printing of the present invention further include N-vinyl caprolactam in order to improve the adhesiveness to polyvinyl chloride sheets.

In the present invention, the amount of N-vinyl caprolactam is preferably 1 to 30% by mass of the photocurable ink composition for ink-jet printing, and is more preferably 10 to 20% by mass. If the amount is less than 1% by mass, the adhesiveness to polyvinyl chloride sheets may be low. If the amount is more than 30% by mass, the viscosity of the ink composition will be problematically too high.

Other photopolymerizable compounds other than the monomers specified above may also be used in combination as photocurable compounds in the photocurable ink composition for ink-jet printing of the present invention as long as they are used in amounts that do not deteriorate the performance of the present invention, especially do not lower the flash point. These other photopolymerizable compounds are not particularly limited and may be monomer, prepolymers, oligomers, or the like as long as they are ethylenic double bond-containing compounds.

Specific examples the other photocurable compounds include ethylene glycol di(meth)acrylate, diethylene glycol di(meth)acrylate, polyethylene glycol di(meth)acrylate, 1,6-hexanediol di(meth)acrylate, ethoxylated 1,6-hexanediol di(meth)acrylate, neopentyl glycol di(meth)acrylate, ethoxylated neopentyl glycol di(meth)acrylate, propoxylated neopentyl glycol di(meth)acrylate, tripropylene glycol di(meth)acrylate, polypropylene glycol di(meth)acrylate, 1,4-butanediol di(meth)acrylate, 1,9-nonanediol di(meth)acrylate, tetraethylene glycol di(meth)acrylate, 2-n-butyl-2-ethyl-1,3-propanediol di(meth)acrylate, dimethylol-tricyclodecane di(meth)acrylate, neopentyl glycol hydroxypivalate di(meth)acrylate, 1,3-butylene glycol di(meth)acrylate, ethoxylated bisphenol A di(meth)acrylate, propoxylated bisphenol A di(meth)acrylate, cyclohexane dimethanol di(meth)acrylate, dimethyloldicyclopentane di(meth)acrylate, trimethylolpropane tri(meth)acrylate, ethoxylated trimethylolpropane tri(meth)acrylate, propoxylated trimethylolpropane tri(meth)acrylate, pentaerythritol tri(meth)acrylate, tetramethylolpropane tri(meth)acrylate, tetramethylolmethane tri(meth)acrylate, pentaerythritol tetra(meth)acrylate, ethylene oxide modified pentaerythritol tetra(meth)acrylate, caprolactone modified trimethylolpropane tri(meth)acrylate, ethoxylated isocyanurate tri(meth)acrylate, tri(2-hydroxyethylisocyanurate) tri(meth)acrylate, propoxylate glyceryl tri(meth)acrylate, tetramethylolmethane tetra(meth)acrylate, ditrimethylolpropane tetra(meth)acrylate, ethoxylated pentaerythritol tetra(meth)acrylate, dipentaerythritol hexa(meth)acrylate, neopentyl glycol oligo(meth)acrylate, 1,4-butanediol oligo(meth)acrylate, 1,6-hexanediol oligo(meth)acrylate, trimethylolpropane oligo(meth)acrylate, pentaerythritol oligo(meth)acrylate, urethane (meth)acrylate, epoxy (meth)acrylate, polyester (meth)acrylate, 2-phenoxyethyl (meth)acrylate, (meth)acryloyl morpholine, 2-hydroxyethyl (meth)acrylate, 2-hydroxypropyl (meth)acrylate, 4-hydroxybutyl (meth)acrylate, isobutyl (meth)acrylate, t-butyl (meth)acrylate, isooctyl (meth)acrylate, isobornyl (meth)acrylate, cyclohexyl (meth)acrylate, methoxytriethylene glycol (meth)acrylate, tetrahydrofurfuryl (meth)acrylate, 3-methoxybutyl (meth)acrylate, benzyl (meth)acrylate, ethoxyethoxyethyl (meth)acrylate, butoxyethyl (meth)acrylate, ethoxy diethylene glycol (meth)acrylate, methoxy dipropylene glycol (meth)acrylate, methylphenoxyethyl (meth)acrylate, dipropylene glycol (meth)acrylate, and ethylene oxide (EO) modified or propylene oxide (PO) modified compounds of these. Any of these other photopolymerizable compounds may be used alone, or two or more of these may be used if necessary.

The photopolymerization initiator in the photocurable ink composition for ink-jet printing of the present invention is a photopolymerization initiator (compound) that comes to function as an initiator in response to light having a wavelength of 450 to 300 nm. The term "photopolymerization initiator that comes to function as an initiator in response to light having a wavelength of 450 to 300 nm" means an initiator that exhibits light absorption properties over the entire wavelength range of 450 to 300 nm.

Specific examples of the photopolymerization initiator include triazine-based initiators such as 2,4,6-trichloro-s-triazine, 2-phenyl-4,6-bis(trichloromethyl)-s-triazine, 2-(p-methoxyphenyl)-4,6-bis(trichloromethyl)-s-triazine, 2-(p-tolyl)-4,6-bis(trichloromethyl)-s-triazine, 2-pipenyl-4,6-bis(trichloromethyl)-s-triazine, 2, 4-bis (trichloromethyl)-6-styryl-s-triazine, 2-(naphtho-1-il)-4,6-bis(trichloromethyl)-s-triazine, 2-(4-methoxy-naphtho-1-il)-4,6-bis(trichloromethyl)-s-triaz ine, 2,4-trichloromethyl-(piperonyl)-6-triazine, and 2,4-trichloromethyl(4'-methoxystyryl)-6-triazine. Examples of these triazine-based initiators include TAZ-204 (trade name, product of Midori Kagaku Co., Ltd.). Other examples thereof include 2,4,6-trimethylbenzoyl-diphenylphosphine oxide (trade name: TPO, product of Lamberti), and bis(2,4,6-trimethylbenzoyl)-phenylphosphine oxide (trade name: IRGACURE 819, product of Ciba Speciality Chemicals). Any of these may be used alone, or two or more of these may be used in combination.

The amount of the photopolymerization initiator is preferably 3 to 20% by mass of the photocurable ink composition for ink-jet printing, and is more preferably 3 to 13% by mass. If the amount of the photopolymerization initiator is less than 3% by mass, the curing properties in response to light from light emitting diodes (LEDs) may not be at a sufficient level. If the amount is more than 20% by mass, the improvements of effects are not achieved, and the amount is undesirably too much.

The sensitizer in the photocurable ink composition for ink-jet printing of the present invention is a sensitizer (compound) that comes to function as a sensitizer in response to light having a wavelength of 400 nm or longer.

The term "sensitizer that comes to function as a sensitizer in response to light having a wavelength of 400 nm or longer" means a sensitizer that exhibits light absorption properties in the wavelength range of 400 nm or longer.

Examples of the sensitizer include anthracene derivatives such as 9,10-dibutoxyanthracene, 9,10-diethoxyanthracene, 9,10-dipropoxyanthracene, and 9,10-bis(2-ethylhexyloxy)anthracene; and thioxanthone-based sensitizers such as 2,4-diethylthioxanthone, 2-isopropylthioxanthone, and 4-isopropylthioxanthone. As representative examples of commercially available products of the anthracene derivatives are mentioned DBA and DEA (products of Kawasaki Kasei Chemicals Ltd.). As examples of commercially available products of the thioxanthone-based sensitizers are mentioned DETX and ITX (products of LAMBSON).

The amount of the sensitizer is preferably 0.5 to 3% by mass of the photocurable ink composition for ink-jet printing. If the amount of the sensitizer is less than 0.5% by mass, the curing properties in response to light from light emitting diodes (LEDs) may not be at a sufficient level. If the amount is more than 3% by mass, the improvements of effects are not achieved, and the amount is undesirably too much.

In addition to the photopolymerization initiator and sensitizer described above, the photocurable ink composition for ink-jet printing may further contain photopolymerization initiators and sensitizers other than the photopolymerization initiator and sensitizer.

The photocurable ink composition for ink-jet printing of the present invention may further contain colorants if necessary. The colorants are not particularly limited and may be colorants conventionally used in photocurable ink compositions for ink-jet printing. Suitable examples thereof include pigments that disperse well in the ink composition and have high light resistance. The pigments may be organic or inorganic pigments.

Specific examples of the organic pigments include dye lake pigments, azo pigments, benzimidazolone pigments, phthalocyanine pigments, quinacridone pigments, anthraquinone pigments, dioxazine pigments, indigo pigments, thioindigo pigments, perylene pigments, perynone pigments, diketopyrrolopyrrole pigments, isoindolinone pigments, nitro pigments, nitroso pigments, anthraquinone pigments, flavanthrone pigments, quinophthalone pigments, pyranthrone pigments, and indanthrone pigments. Examples of the inorganic pigments include carbon black, titanium oxide, red oxide, graphite, iron black, chromic oxide green, and aluminum hydroxide.

In the case that pigments are used, the amount thereof is preferably 1 to 20% by mass of the photocurable ink composition for ink-jet printing. If the amount of the pigments is less than the above range, the image quality of a printed article to be provided is likely to be low. If the amount exceeds the above range, the pigments are likely to adversely affect the viscosity of the photocurable ink composition for ink-jet printing.

In the case that pigments are used in the photocurable ink composition for ink-jet printing of the present invention, a pigment dispersant is preferably used in order to improve the dispersability of the pigments and the storage stability of the ink composition.

The pigment dispersant is not particularly limited and may be a conventionally used pigment dispersant. Among the conventional pigment dispersants, polymeric dispersants are preferable. Examples of these pigment dispersants include carbodiimide dispersants, polyesteramine dispersants, aliphatic amine dispersants, modified polyacrylate dispersants, modified polyurethane dispersants, multi-chain polymeric nonionic dispersants, and polymeric ion activators. Any of these pigment dispersants may be used alone, or a mixture of two or more of these may be used.

The amount of the pigment dispersant is typically 1 to 200 parts by mass per 100 parts by mass of the total amount of pigments to be used, and is preferably 1 to 60 parts by mass. If the amount of the pigment dispersant is less than 1 part by mass, the dispersability of the pigments and the storage stability of the ink composition will be low. The use of more than 200 parts by mass of the pigment dispersant is possible but may not produce remarkable effects.

If necessary, the photocurable ink composition for ink-jet printing of the present invention may contain a solvent as long as the amount thereof is determined such that the flash point of the photocurable ink composition for ink-jet printing can be maintained at a temperature of higher than 60°C. As the solvent, solvents whose boiling temperature at a normal pressure (1013 hPa) is 150 to 220°C are suitable. Specific examples thereof include ester organic solvents, ether organic solvents, ether ester organic solvents, ketone organic solvents, aromatic hydrocarbon solvents, and nitrogen-containing organic solvents. However, from the viewpoints of the curing properties and flash point of the ink composition, environmental problems and other factors, it is preferable to avoid use of organic solvents if possible. Specifically, the organic solvent content of the photocurable ink composition for ink-jet printing is preferably 5% by mass or less, more preferably 2% by mass or less, and particularly preferably 0% by mass.

If necessary, the photocurable ink composition for ink-jet printing of the present invention may further contain additives of various types which give various functions. Specific examples thereof include light stabilizers, surface treatment agents, surfactants, viscosity lowering agents, antioxidants, age resistors, crosslinking promoters, polymerization inhibitors, plasticizers, antiseptics, pH adjusters, defoaming agents, and moisturizing agents.

The photocurable ink composition for ink-jet printing of the present invention, which contains the above components, has a flash point of higher than 60°C when measured with a SETA closed-cup flash point tester by a method in accordance with JIS K2265. Since the flash point is at this level, the safety of the photocurable ink composition for ink-jet printing of the present invention corresponds to Category 4 for flammable liquids under the GHS. Namely, the photocurable ink composition for ink-jet printing of the present invention has high safety properties such as low flammability.

In order to achieve good ink jetability and form a thick printed coat, the photocurable ink composition for ink-jet printing of the present invention has a viscosity of not higher than 20 mPa·s at an ink-jet printing liquid temperature, preferably 5 to 10 mPa·s, and particularly preferably 5 to 8 mPa·s.

The term "ink-jet printing liquid temperature" used herein means the temperature of the ink composition determined as follows. Specifically, when the photocurable ink composition for ink-jet printing of the present invention is used for ink-jet printing at a room temperature (25°C), the printing liquid temperature is the room temperature; and when an ink tank of an ink-jet printer is heated and the photocurable ink composition is used for printing at a temperature higher than room temperature, the printing temperature is the actual temperature of the ink tank heated for printing.

The printing temperature is room temperature in most cases and is preferably lower than 60°C.

The viscosity at an ink-jet printing temperature is a value measured with an E-type viscometer (trade name: RE100L viscometer, product of TOKI SANGYO CO., LTD.).

The photocurable ink composition for ink-jet printing of the present invention is excellent in all of the following properties: curing properties in response to light from light emitting diode (LEDs); adhesiveness to vinyl chloride sheets; ability to prevent cockling; jetability including low viscosity; and safety properties including low flammability. Since the ink composition for ink-jet printing of the present invention contains the photopolymerizable compounds, the photopolymerization initiator and the sensitizer specified above, these effects are given.

The ink composition of the present invention can be prepared by any method, and may be prepared by mixing all of the above-mentioned materials together with a bead mill, a three-roll mill, or the like. In the case that pigments are used, the ink composition can be prepared by preparing a concentrated base beforehand by mixing the pigments, a pigment dispersant, and photopolymerizable compounds, and then adding, to the concentrated base, components including the photopolymerizable compounds, the photopolymerization initiator, and the sensitizer in amounts determined to achieve a desired composition.

### <Printed Article Obtained from Photocurable Ink Composition for Ink-Jet Printing>

As substrates on which the photocurable ink composition for ink-jet printing of the present invention is to be printed, polyvinyl chloride sheets such as tarpaulin and vinyl chloride resin sheets are preferable although the photocurable ink composition for ink-jet printing can be printed without any problems on substrates which have been conventionally used for printing ink compositions for ultraviolet ray ink-jet printing (e.g. paper, plastic film, capsule, gel, metal foil, glass, wood, cloth, etc.).

The photocurable ink composition for ink-jet printing may be printed and cured specifically as follows: jetting the photocurable ink composition for ink-jet printing on a substrate; and then curing the photocurable ink composition for ink-jet printing jetted on the substrate by exposure to light.

For example, the jetting of the ink composition on a substrate (printing of an image) can be performed by supplying the ink composition for ink-jet printing to a print head of an ink-jet recording printer, and jetting the ink composition on a recording material from this print head to form a coat having a thickness of 1 to 20 µm. The exposure to light and curing of the ink composition (curing of the image) can be performed by irradiating with light the ink composition applied on the recording material as an image.

As an ink-jet recording printer used to print the photocurable ink composition for ink-jet printing, a conventionally used ink-jet recording printer can be used. In the case that a continuous-type ink-jet recording printer is used, a conductivity imparting agent is further added to the photocurable ink composition for ink-jet printing to control the electrical conductance.

Examples of light sources for curing images include ultraviolet light sources, electron light sources, visible light sources, and light emitting diodes (LEDs). Even if LEDs are used as light sources, the curing properties of the photocurable ink composition for ink-jet printing of the present invention are good. The use of LEDs can cure an image with low energy without generating ozone. Light from LEDs is preferably active energy rays whose wavelength peak is within the range of 365 to 420 nm. The printed article obtained as above is also one aspect of the present invention.

Specifically, the printed article of the present invention is obtainable by printing the photocurable ink composition for ink-jet printing at a thickness of 1 to 20 µm on a polyvinyl chloride sheet and photocuring the ink composition for ink-jet printing.

### EFFECTS OF THE INVENTION

The photocurable ink composition for ink-jet printing of the present invention contains the components described above and exhibits excellent curing properties in response to light from light emitting diodes (LEDs), is adhered well to a polyvinyl chloride sheet such as tarpaulin or a vinyl chloride sheet, can sufficiently reduce cockling, and is excellent in the jetability at a normal temperature and safety properties. By taking advantage of these properties, the ink composition of the present invention can contribute to improvement of the safety of photocuring ink-jet printing and size reduction of printers.

### MODE FOR CARRYING OUT THE INVENTION

Hereinafter, the present invention is described in more detail by way of non-limiting examples. It should be noted that all percentages are by mass unless otherwise specified, and all parts are by mass unless otherwise specified.

In the following examples and comparative examples, the following materials were used.

### <Pigment Dispersant>

AJISPER (registered trademark) PB821 (product of Ajinomoto Co., Inc.)

### <Photopolymerizable Compound>

CN371; (REACTIVE AMINE COINITIATOR, product of SARTOMER, amine value: 137, functional groups: two amine groups and two acryloyl groups)
CN 373; (REACTIVE AMINE COINITIATOR, product of SARTOMER, amine value: 235, functional groups: one amine group and two acryloyl groups)
HDODA; 1,6-hexanediol acrylate
LA; lauryl acrylate
SR395; isodecyl acrylate
DEAA; diethylacrylamide
V-CAP; N-vinyl caprolactam
(PO)NPGDA; propoxylated neopentyl glycol di(meth)acrylate

### <Photopolymerization Initiator>

TPO; 2,4,6-trimethylbenzoyl diphenyl phosphine oxide (product of LAMBERTI)
IRGACURE 819; bis(2,4,6-trimethylbenzoyl)-phenyl phosphine oxide (product of Ciba Specialty Chemicals)
IRGACURE 907 (initiator that comes to function in response to light having a wavelength of 260 to 340 nm, or 240 nm or shorter, product of Ciba Specialty Chemicals)

### <Sensitizer>

DETX; 2,4-diethylthioxanthone

### <Additive>

BYK-377 (silicone additive, product of BYK chemie)

### Examples 1 to 9 and Comparative Examples 1 to 8

### <preparation of Photocurable Ink Composition for Ink-Jet Printing>

A mixture of a pigment (Pigment Blue 15:4), a pigment dispersant (Ajisper PB821, product of Ajinomoto Co., Inc.), and a photopolymerizable compound (propoxylated neopentyl glycol diacrylate) were prepared (blending ratio (mass ratio) = 22/8.8/69.2). The mixture was dispersed using Eiger Mill (media: zirconia beads having a diameter of 0.5 mm) to provide a concentrated base. The components were mixed in amounts (% by mass) shown in Table 1 with the prepared concentrated base such that the ink compositions of Examples 1 to 9 and Comparative Examples 1 to 8 were prepared.

### <Measurement of Viscosity of Photocurable Ink Composition for Ink-Jet Printing>

Since, in the print test performed in the present invention, the printing temperature of the ink compositions was 25°C, the viscosity at 25°C was measured for each of the photocurable ink compositions for ink-jet printing prepared in Examples 1 to 9 and Comparative Examples 1 to 8 with an E-type viscometer (trade name: RE100L viscometer, product of Toki Sangyo Co., Ltd.). Table 2 shows the results.

### <Measurement of Flash Point of Photocurable Ink Composition for Ink-Jet Printing>

The flash point was measured for each of the photocurable ink compositions for the ink-jet printing prepared in Examples 1 to 9 and Comparative Examples 1 to 8 by a method in accordance with JIS K2265 with a SETA closed-cup flash point tester. During the measurement, the temperature was kept constant using an aluminum block. Table 2 shows the results.

### <Performance Evaluation of Photocurable Ink Composition for Ink-Jet Printing>

Each of the photocurable ink compositions for the ink-jet printing prepared in Examples 1 to 9 and Comparative Examples 1 to 8 was applied to a polyvinyl chloride sheet (Flontlit Grossy 120g, product of Cooley) using a bar coater #4. Subsequently, each ink composition was cured using a Z-8 lamp (mercury lamp, product of Heraeus K.K.) or a LED lamp (product of Phoseon Technology). Each ink composition was evaluated for cure rate, LED cure rate, adhesiveness, and solvent resistance by the following methods. Table 2 shows the results.

### (Cure Rate)

Each ink composition was evaluated for cure rate with the Z-8 lamp (marcury lamp, product of Heraeus K.K.) under irradiation conditions of 60 W × 23 m/ min, and a distance of 13 cm (integrated amount of UV light: 300 mJ/cm²) by the number of passes required until the surface of each ink composition lost its tackiness.

### (LED Cure Rate)

Each ink composition was evaluated for LED cure rate with the LED lamp (product of Phoseon Technology) under an irradiation condition of 40 mJ/cm²/sec by the number of passes required until the surface of each ink composition lost its tackiness.

### (Adhesiveness)

Each coat was cut in crosscut, and the cut samples were evaluated for the degree of ink peeling using a cellophane tape according to the following criteria.
+; No removed part was observed.
-; Removed parts were observed.

### (Solvent Resistance)

A cloth soaked with MEK (methyl ethyl ketone) was pressed against the surface of each coat by the palm-side tip of a finger and the surface was rubbed with the cloth five times. Then, each coat was evaluated for the degree of peeling according to the following criteria.
+; No removed part was observed.
-; Removed parts were observed.

### (Cockling Prevention Ability)

Each of the ink compositions was applied to a polyvinyl chloride sheet (Flontlit Grossy 120g, product of Cooley) using a bar coater #12, and then cured by UV radiation. Then, the sheet was evaluated based on the presence of wrinkles (the degree of shrinkage) by observing its back surface according to the following criteria.
+; No shrinkage was observed in the coated part like the uncoated part.
-; Shrinkage was observed and the coated part bloated up compared to the uncoated part.

**[Table 1]**

| | Examples | | | | | | | | | Comparative Examples | | | | | | | |
|---|---|---|---|---|---|---|---|---|---|---|---|---|---|---|---|---|---|
| | 1 | 2 | 3 | 4 | 5 | 6 | 7 | 8 | 9 | 1 | 2 | 3 | 4 | 5 | 6 | 7 | 8 |
| Concentrated base | 8 | 8 | 8 | 8 | 8 | 8 | 8 | 8 | 8 | 8 | 8 | 8 | 8 | 8 | 8 | 8 | 8 |
| CN371 | 12 | 12 | 12 | 12 | 12 | 12 | 18 | 12 | 12 | 12 | 12 | - | - | 12 | 12 | 12 | 12 |
| CN373 | - | - | - | - | - | - | - | - | - | - | - | 12 | - | - | - | - | - |
| V-CAP | 15 | 15 | 15 | 15 | 15 | 15 | 15 | 15 | 20 | 15 | 15 | 15 | 15 | 15 | 15 | 15 | 15 |
| HDODA | 34 | 20 | 20 | 20 | 9.5 | 20 | 14 | - | 15 | 39 | 13.5 | 20 | 20 | 20 | 20 | 20 | 20 |
| (PO)NPGDA | - | - | - | - | - | - | - | 20 | - | - | - | - | - | - | - | - | - |
| 2-Methoxyethyl acrylate | 22.5 | 36.5 | 36.5 | 31.5 | 47 | - | 36.5 | 36.5 | 36.5 | 17.5 | 55 | 36.5 | 48.5 | 36.5 | 36.5 | - | - |
| 2-Ethoxyethyl acrylate | - | - | - | - | - | 36.5 | - | - | - | - | - | - | - | - | - | - | - |
| LA | - | - | - | 5 | - | - | - | - | - | - | - | - | - | - | - | - | - |
| DEAA | - | - | - | - | - | - | - | - | - | - | - | - | - | - | - | 36.5 | - |
| SR395 | - | - | - | - | - | - | - | - | - | - | - | - | - | - | - | - | 36.5 |
| TPO | 6 | 6 | - | 6 | 6 | 6 | 6 | 6 | 6 | 6 | 6 | 6 | 6 | - | - | 6 | 6 |
| IRGACURE 819 | - | - | 6 | - | - | - | - | - | - | - | - | - | - | - | - | - | - |
| DETX | 2 | 2 | 2 | 2 | 2 | 2 | 2 | 2 | 2 | 2 | 2 | 2 | 2 | - | - | 2 | 2 |
| 2,4,6-Trimethylbenzophenone | - | - | - | - | - | - | - | - | - | - | - | - | - | 8 | - | - | - |
| IRGACURE 907 | - | - | - | - | - | - | - | - | - | - | - | - | - | - | 8 | - | - |
| BYK377 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Total | 100 | 100 | 100 | 100 | 100 | 100 | 100 | 100 | 100 | 100 | 100 | 100 | 100 | 100 | 100 | 100 | 100 |

**[Table 2]**

| | Examples | | | | | | | | | Comparative Examples | | | | | | | |
|---|---|---|---|---|---|---|---|---|---|---|---|---|---|---|---|---|---|
| | 1 | 2 | 3 | 4 | 5 | 6 | 7 | 8 | 9 | 1 | 2 | 3 | 4 | 5 | 6 | 7 | 8 |
| Viscosity (mPa·s 25°C) | 7.2 | 6.1 | 6.2 | 6.5 | 4.1 | 6.1 | 10 | 7 | 6.5 | 9 | 2.5 | 12 | 3 | 6.1 | 6.1 | 8.2 | 9.6 |
| Flash point (°C) | 72 | 69 | 69 | 72 | 61 | Not lower than 70 | Not lower than 70 | 69 | 69 | Not lower than 70 | Lower than 60 | 70 | Lower than 60 | 69 | 69 | Not lower than 70 | Not lower than 70 |
| Cure rate | Once | Once | Once | Once | Once | Once | Once | Once | Once | Twice | Once | Once | Not less than ten times | Twice | Twice | Twice | Twice |
| Adhesiveness | + | + | + | + | + | + | + | + | + | + | + | - | - | + | + | + | + |
| Solvent resistance | + | + | + | + | + | + | + | + | + | + | + | + | + | + | + | + | + |
| Cockling prevention ability | + | + | + | + | + | + | + | + | + | + | + | + | - | + | + | + | + |
| LED cure rate | Once | Once | Once | Once | Once | Once | Once | Once | Once | Twice | Once | Once | Not less than ten times | Not cured | Not cured | Seven times | Three times |
| Adhesiveness | + | + | + | + | + | + | + | + | + | + | + | - | - | - NA | NA | + | + |
| Solvent resistance | + | + | + | + | + | + | + | + | + | + | + | + | + | N.A. | NA | + | + |
| Cockling prevention ability | + | + | + | + | + | + | + | + | + | + | + | + | - | NA | NA | + | + |

Table 2 indicates that in spite of their high flash point (over 60°C), all of the ink compositions of Examples 1 to 9 according to the present invention showed a practical level of curing properties and were excellent in the adhesiveness and cockling prevention ability even when the light emitting diode (LED), which is a low-power output lamp, was used. These properties could be achieved by the design of the present invention, in other words the components contained as photopolymerizable compounds: 2-methoxyethyl acrylate and/or 2-ethoxyethyl acrylate; N-vinyl caprolactam; an acrylated amine compound having two photopolymerizable functional groups and two amino groups in the molecule. In contrast, among the ink compositions for ink-jet printing of Comparative Examples 1 to 8, which did not contain all of these components, some had a flash point of lower than 60°C when the light emitting diode (LED), which is a low-power output lamp, was used; and some did not show a practical level of curing properties or were not excellent in the adhesiveness and cockling prevention ability. These results indicate that the ink compositions for ink-jet printing of the present invention achieved both of practical levels of curing properties and safety properties.

### <Printing of Photocurable Ink Composition for Ink-Jet Printing>

An ink-jet recording apparatus including a piezo-type ink-jet nozzle and the photocurable ink compositions of Examples 1 to 9 and Comparative Examples 1 to 8 were left at an atmospheric temperature of 25°C for 24 hours so that the temperature of the apparatus and the ink compositions became 25°C. Subsequently, the ink compositions were sequentially printed on a polyvinyl chloride sheet (Flontlit Grossy 120g, product of Cooley) at an atmospheric temperature of 25°C using this apparatus, and thus images were obtained. Each photocurable ink composition for ink-jet printing showed good jetability and the obtained images had a predetermined thickness (10 µm).

### INDUSTRIAL APPLICABILITY

Although the photocurable ink composition for ink-jet printing of the present invention has a flash point of higher than 60°C and is classified into Category 4 for flammable liquids under the GHS, the photocurable ink composition for ink-jet printing of the present invention has a low viscosity which ensures good jetability, and in addition, shows practical levels of curing properties and good cockling prevention ability even when a low-power output lamp such as a UV LED was used. Owing to these properties, the photocurable ink composition for ink-jet printing of the present invention can contribute to improvement of the safety of photocuring ink-jet printing and size reduction of printers.

## Claims

1. A photocurable ink composition for ink-jet printing, comprising at least:
photopolymerizable compounds;
a photopolymerization initiator; and
a sensitizer, and
having a flash point of higher than 60°C when measured with a SETA closed-cup flash point tester by a method in accordance with JIS K2256,
wherein said photopolymerizable compounds include 2-methoxyethyl acrylate and/or 2-ethoxyethyl acrylate, and N-vinyl caprolactam, and an acrylated amine compound having two photopolymerizable functional groups and two amino groups in the molecule,
the total amount of 2-methoxyethyl acrylate and/or 2-ethoxyethyl acrylate is 20 to 50% by mass of said photocurable ink composition for ink-jet printing,
said photopolymerization initiator includes a compound that comes to function as an initiator in response to light having a wavelength of 450 to 300 nm, and
said sensitizer includes a compound that comes to function as a sensitizer in response to light having a wavelength of 400 nm or longer.

2. The photocurable ink composition for ink-jet printing according to claim 1,
wherein the acrylated amine compound has (meth) acryloyl groups as the two photopolymerizable functional groups and has an amine value of 130 to 142 KOHmg/g.

3. The photocurable ink composition for ink-jet printing according to claim 1 or 2,
which has a viscosity of not higher than 20 mPa·s at an ink-jet printing liquid temperature.

4. The photocurable ink composition for ink-jet printing according to claim 1, 2 or 3, further comprising a pigment.

5. A printed article obtainable by printing the photocurable ink composition for ink-jet printing according to claim 1, 2, 3 or 4 at a thickness of 1 to 20 µm on a polyvinyl chloride sheet and photocuring the ink composition for ink-jet printing.

## Patentansprüche

1. Photohärtbare Tintenzusammensetzung zum Tintenstrahldrucken, wenigstens umfassend:
photopolymerisierbare Verbindungen,
einen Photopolymerisationsinitiator und
einen Sensibilisator, und
die einen Flammpunkt von über 60 °C aufweist, wenn er mit einem SETA-closed-cup-Flammpunkttester mittels eines Verfahrens in Übereinstimmung mit JIS K2256 gemessen wird,
wobei
die photopolymerisierbaren Verbindungen 2-Methoxyethylacrylat und/oder 2-Ethoxyethylacrylat und N-Vinylcaprolactam und eine acrylierte Aminverbindung mit zwei photopolymerisierbaren funktionellen Gruppen und zwei Aminogruppen im Molekül umfassen,
die Gesamtmenge von 2-Methoxyethylacrylat und/oder 2-Ethoxyethylacrylat 20 bis 50 Massen-% der photohärtbaren Tintenzusammensetzung zum Tintenstrahldrucken beträgt,
der Photopolymerisationsinitiator eine Verbindung umfasst, die in Reaktion auf Licht mit einer Wellenlänge von 450 bis 300 nm als ein Initiator fungiert, und
der Sensibilisator eine Verbindung umfasst, die in Reaktion auf Licht mit einer Wellenlänge von 400 nm oder länger als ein Sensibilisator fungiert.

2. Photohärtbare Tintenzusammensetzung zum Tintenstrahldrucken nach Anspruch 1,
wobei die acrylierte Aminverbindung als die zwei photopolymerisierbaren funktionellen Gruppen (Meth)acryloylgruppen aufweist und einen Aminwert von 130 bis 142 KOH mg/g aufweist.

3. Photohärtbare Tintenzusammensetzung zum Tintenstrahldrucken nach Anspruch 1 oder 2,
die bei einer Tintenstrahldruckflüssigtemperatur eine Viskosität von nicht mehr als 20 mPa·s aufweist.

4. Photohärtbare Tintenzusammensetzung zum Tintenstrahldrucken nach Anspruch 1, 2 oder 3, ferner umfassend ein Pigment.

5. Bedruckter Gegenstand, der mittels Drucken der photohärtbaren Tintenzusammensetzung zum Tintenstrahldrucken nach Anspruch 1, 2, 3 oder 4 mit einer Dicke von 1 bis 20 µm auf ein Polyvinylchloridblatt und Photohärten der Tintenzusammensetzung zum Tintenstrahldrucken erhalten wird.

## Revendications

1. Composition d'encre photodurcissable pour une impression par jet d'encre, comprenant au moins :
des composés photopolymérisables ;
un initiateur de photopolymérisation ; et
un sensibilisant, et
présentant un point éclair supérieur à 60°C lorsqu'il est mesuré avec un dispositif de test de point éclair en bol fermé SETA par un procédé selon JIS K2256,
dans laquelle lesdits composés photopolymérisables comprennent de l'acrylate de 2-méthoxyéthyle et/ou de l'acrylate de 2-éthoxyéthyle, et du N-vinylcaprolactame, et un composé d'amine acrylé présentant deux groupes fonctionnels photopolymérisables et deux groupes amino dans la molécule,
la quantité totale d'acrylate de 2-méthoxyéthyle et/ou d'acrylate de 2-éthoxyéthyle est de 20 à 50 % en masse de ladite composition d'encre photodurcissable pour une impression par jet d'encre,
ledit initiateur de photopolymérisation comprend un composé qui fonctionne comme un initiateur en réponse à de la lumière ayant une longueur d'onde de 450 à 300 nm, et
ledit sensibilisant comprend un composé qui fonctionne comme un sensibilisant en réponse à de la lumière ayant une longueur d'onde de 400 nm ou supérieure.

2. Composition d'encre photodurcissable pour une impression par jet d'encre selon la revendication 1,
dans laquelle le composé d'amine acrylé présente des groupes (méth)acryloyle comme les deux groupes fonctionnels photopolymérisables et présente un indice amine de 130 à 142 mg de KOH/g.

3. Composition d'encre photoduricssable pour une impression par jet d'encre selon la revendication 1 ou 2,
laquelle présente une viscosité d'au plus 20 mPa.s à une température du liquide d'impression par jet d'encre.

4. Composition d'encre photodurcissable pour une impression par jet d'encre selon la revendication 1, 2 ou 3, comprenant de plus un pigment.

5. Article imprimé pouvant être obtenu par impression de la composition d'encre photodurcissable pour une impression par jet d'encre selon la revendication 1, 2, 3 ou 4 à une épaisseur de 1 à 20 µm sur une feuille de poly(chlorure de vinyle) et photodurcissement de la composition d'encre pour une impression par jet d'encre.
